# EUROPEAN PATENT SPECIFICATION

(11) **EP 2 239 980 B1**
(45) Date of publication and mention of the grant of the patent: **09.05.2012**
(21) Application number: 10168628.5
(22) Date of filing: 25.12.2006
(51) Int. Cl.: H04W 36/14

(54) **Reducing service interruption of a terminal during packet switched handover in a mobile communication**
Reduzierung von Dienstunterbrechungen eines Endgeräts während eines packetvermittelten Handovers in einer Mobilkommunikation
Réduction d'interruption du service d'un terminal pendant un transfer d'une communication de paquet d'un communication mobile

(30) Priority: 29.03.2006 CN 200610073424; 29.03.2006 CN 200610073422; 23.10.2006 CN 200610140225
(43) Date of publication of application: 13.10.2010
(62) Divisional of application: 06840621.4
(73) Proprietor: Huawei Technologies Co., Ltd., Longgang District, Shenzhen Guangdong 518129 (CN)
(72) Inventor: Zhao, Gang, Shenzhen Guangdong 518129 (CN); Hu, Ning, Shenzhen Guangdong 518129 (CN); Wang, Chao, Shenzhen Guangdong 518129 (CN); Yuan, Yi, Shenzhen Guangdong 518129 (CN)
(74) Representative: Thun, Clemens

(56) References cited:
- WO-A-01/72077
- CN-A- 1 283 064
- US-A1- 2004 077 348
- US-A1- 2005 037 758
- US-A1- 2005 070 275

## Description

### FIELD OF THE INVENTION

The present invention relates to the field of mobile communication technologies, and in particular, to a method, a system and a device for monitoring radio resources by a mobile station to reduce service interruption of the mobile station during PS handover in mobile communications.

### BACKGROUND OF THE INVENTION

In the Packet Switched (PS) Domain of a Global System for Mobile Communication (GSM), real-time packet services of session type and stream type, etc., have strict requirements on the Quality of Service (QoS) of jitter ratio and packet loss ratio. Therefore, jitter ratio and packet loss ratio of the real-time packet services are lowered by introducing PS handover.

According to different factors considered, PS handover may be classified into different types. According to the mode of a Mobile Station (MS), PS handover may be classified into PS handover of A/Gb-to-A/Gb mode, PS handover of A/Gb-to-Iu mode and PS handover of Iu-to-Iu mode. According to the network element concerned, PS handover may be classified into Intra Base Station System (BSS) handover, Intra Service GPRS Supporting Node (SGSN) handover and Inter SGSN handover. According to being synchronous or not, PS handover may be classified into synchronous PS handover and asynchronous PS handover. Synchronous PS handover means that the source cell at which the MS locates before PS handover is synchronous with the target cell at which the MS locates after PS handover. Because the MS has known the Timing Advance (TA) in a synchronous PS handover, the step in which the MS sends an Access Burst in the target cell is optional, and the MS may directly send a Normal Burst. Asynchronous PS handover means that the source cell at which the MS locates before PS handover is asynchronous with the target cell at which the MS locates after PS handover. In an asynchronous PS handover, before sending a Normal Burst in the target cell, the MS should obtain the TA by sending an Access Burst first.

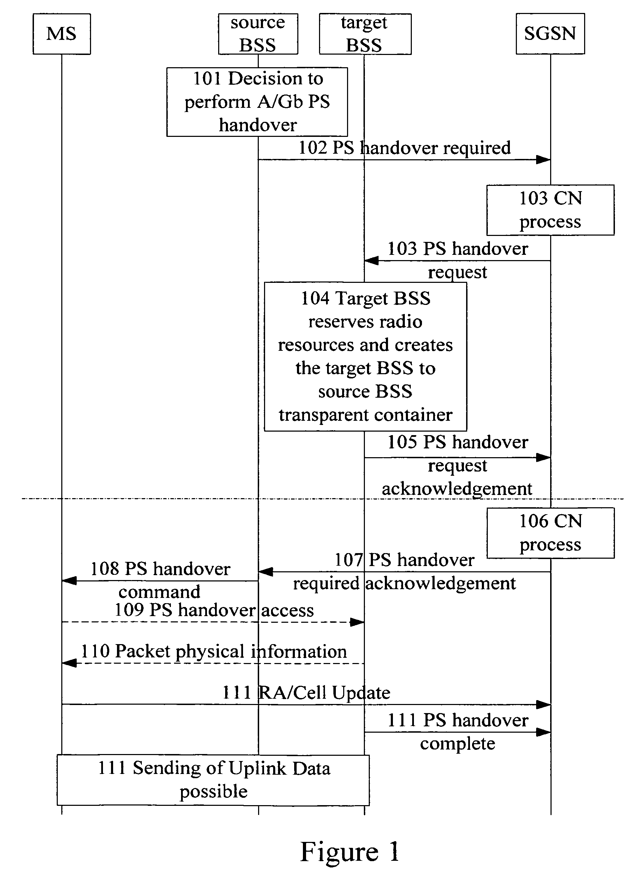

Figure 1 shows a flow chart of PS handover in the prior art. As shown in Figure 1, PS handover includes two stages: preparation and execution. Specifically, the implementing process includes the following steps.

### PS Handover Preparation Stage

In Step 101, a source BSS decides to initiate PS handover (Decision to Perform A/Gb PS handover). There are many causes for PS handover, for example, the source BSS may trigger PS handover according to a measurement report from an MS; the source BSS may also trigger PS handover according to a message for requesting cell reselection reported from an MS, which may be a Packet Cell Change Notification; or, the serving cell resources of the source BSS is limited, so that the BSS may initiate PS handover; or, the source BSS initiates PS handover based on a Cell Change Order of UMTS Territorial Radio Access Network (UTRAN COO) from SGSN, so that the MS may obtain better services in the new cell.

In Step 102, the source BSS sends a PS handover Request carrying a handover cause value, a source cell identifier and a target cell identifier, to the SGSN (PS handover required). If the source BSS triggers PS handover according to the measurement report from an MS, or the source BSS initiates PS handover due to the limited serving cell resources, the target cell may be selected by the source BSS according to the measuring result or the load. If the source BSS triggers PS handover according to a message for requesting cell reelection reported by an MS, or if the source BSS initiates PS handover according to a UTRAN CCO from a SGSN, the target cell may be selected by the MS or other BSS and notified to the source BSS.

In Step 103, after receiving the PS handover Request, the SGSN determines whether the current PS handover type is Intra BSS or Intra SGSN, or Inter SGSN, and performs the subsequent operations according to the determined PS handover type. The SGSN may decide the handover type according to the location of the source cell and the target cell. If the source cell and the target cell are administrated by the same BSS, the current PS handover is Intra BSS type; if the source cell and the target cell are administrated by the same SGSN, the current PS handover is Intra SGSN type; if the source cell and the target cell are administrated by different SGSNs, the current PS handover is Inter SGSN type.

If the current PS handover is Intra BSS or Intra SGSN type, the SGSN determines the target BSS according to the target cell identifier, and determines whether the Routing Area (RA) is changed. If the RA is changed, the SGSN allocates a Packet Temporary Mobile Subscriber Identity (P-TMSI) to the MS, and obtains a Temporary Logical Link Identifier (TLLI) according to the P-TMSI, and then sends a PS handover Request, in which the P-TMSI and TTLI is carried, to the target BSS. If the RA is not changed, the SGSN sends a PS handover Request to the target BSS.

If the current PS handover is Inter SGSN type, the source SGSN determines the target SGSN according to the target cell identifier, and then interacts with the target SGSN. The source SGSN provides the target cell identifier and the MS-related information to the target SGSN. The target SGSN determines the target BSS according to the target cell identifier, and sends a PS handover Request to the target BSS. The source SGSN is the SGSN controlling the source BSS at which the MS locates before PS handover, and the target SGSN is the SGSN controlling the target BSS at which the MS locates after PS handover.

In Step 104, after receiving the PS handover Request, the target BSS allocates and reserves radio resources for the MS according to an allocation policy and the radio resources which could be allocated currently, and creates a Container from the target BSS to the source BSS, the content of which is the radio resource allocation information from the target BSS to the source BSS, i.e., the description information of the radio resource allocated to the MS, such as Temporary Flow Identity (TFI). The radio resource allocated and reserved by the target BSS for the MS at least includes uplink Temporary Block Flow (TBF), which may be identified with an Uplink State Flag (USF).

In Step 105, if the current PS handover is Intra BSS or Intra SGSN type, the target BSS sends to the SGSN a PS handover Request Acknowledgment carrying Container information; if the PS handover is Inter SGSN type, the target BSS sends to the target SGSN a PS handover Request Acknowledgment carrying Container information.

### PS Handover Execution Stage

In Step 106, if the current PS handover is Inter SGSN type, after receiving the PS handover Request Acknowledgment, the target SGSN sends to the source SGSN handover information, such as Network Service Access Point Identifier (NSAPI) and User plane of GPRS Tunneling Protocol Number (GTP-U Number); if the current PS handover is Intra BSS or Intra SGSN type, this step is omitted.

In Step 107, the SGSN sends a PS handover Request Acknowledgment carrying the Container content to the source BSS used for notifying the source BSS to be ready for the handover. If the current PS handover is Inter SGSN type, the SGSN in this step will be the source SGSN.

In Step 108, after receiving the PS handover Request Acknowledgment, the source BSS terminates the uplink service of the MS according to the QoS requirement, and then interrupts the Logic Link Control (LLC) Protocol Data Unit (PDU) of the downlink TBF of the MS, and sends a PS handover command carrying the target BSS identifier to the MS used for notifying the MS to perform PS handover.

In Step 109, after receiving the PS handover command, the MS stops temporarily the uplink subscriber data transmission, and buffers or discards the uplink subscriber data according to the QoS requirement of the current service. And then the MS starts to run the handover command, switching to the time slot and radio channel of the target cell according to the target BSS identifier, and sending a PS handover Access message carrying a handover reference to the target BSS according to the PS handover command. The handover reference is used by the target cell for identifying the MS and determining whether the MS could access the target cell. The target cell allocates radio resources to the MS and waits for the MS to access it.

In Step 110, after receiving the PS handover Access message, the target BSS returns a Packet Physical Information message carrying a TA to the MS used for notifying the MS of the correct TA.

In Step 111, the MS sends a Radio Link Control (RLC)/Media Access Control (MAC) data block in Normal Burst Format to the target BSS. The MS starts to recover the sending of uplink LLC PDU, such as location update request, in a radio channel allocated by the target BSS using Normal Burst Format. When receiving the first correct RLC/MAC data block in Normal Burst Format from the MS, the target BSS sends a PS handover complete message to the SGSN via a Gb interface, notifying the SGSN that the PS handover is completed.

Step 109 and Step 110 are optional in a synchronous handover. In an asynchronous handover, Step 109 and Step 110 should be performed. The MS may directly send an RLC/MAC data block in Normal Burst Format to the target BSS, rather than send a PS handover Access message to access the target BSS. And then, the target BSS also omits the step of sending the corresponding Packet Physical Information message to the MS.

The above Container content may carry a PS handover command, and the content of the message may include: page mode (PAGE_MODE), TBF identifier (Global TFI), container identifier (CONTAINER_ID) and A/Gb-mode-based PS handover payload (PS handover to A/Gb Mode Payload) or Iu-mode-based PS handover payload (PS handover to UTRAN/GERAN Iu Mode Payload). In particular, the payload consists of radio access part and core network part. The radio access part includes synchronous handover indication, dynamically allocated or extended dynamically allocated uplink and downlink TBF parameters, PS handover reference, general parameters for accessing target cell. And the core network part includes frame synchronization and encryption.

It can be seen from the above that, in Step 104 at the PS handover preparation stage, after receiving a PS handover Request sent from the SGSN, the target BSS reserves radio resources including at least an uplink TBF for the MS, and in Step 109 and Step 111 at the PS handover execution stage, the PS handover Access message or the uplink data block sent from the MS to the target BSS are scheduled by the uplink TBF Therefore the MS can send the PS handover Access message or uplink data block to the target BSS after the uplink TBF allocated is received on the allocated channel, and the PS handover Access message should be sent in a block allocated by the uplink TBF.

Another solution is provided in WO01/72077 published on 27 September 2001. It discloses a method and arrangement for controlling a cell change performed by a terminal of a cellular radio system. In particular it relates to a cell change in a situation where the terminal is connected to a special service provided by its current cell, e.g. to the GPRS service

In conclusion, the target BSS allocates an uplink TBF to the MS. After completing the allocation and reservation of the radio resources, the target BSS does not monitor the radio resources reserved. In the PS handover process, if the MS does not normally receive the uplink TBF allocated by the target BSS due to a certain cause, the MS will be waisting for the scheduling of the uplink TBF in the target cell all the time, thereby causing an unnecessary interruption of the MS's service.

### SUMMARY OF THE INVENTION

Accordingly, an embodiment of the present invention provides a method and a device for reducing service interruption of a mobile station by monitoring radio resources via the MS.

To achieve the above objects, an embodiment of the present invention provides a method for reducing service interruption of a mobile station during PS handover in mobile communication, which is applied in a PS handover execution process, the method includes:

After receiving a PS handover command sent from an source BSS, a mobile station monitors a radio channel of a target BSS; and

If the MS receives the radio resource information from the target BSS in the radio channel in a certain period of time, the MS starts to run the PS handover command and completes the PS handover; if the MS does not receive the radio resource information from the target BSS in the radio channel, the MS performs a handover failure flow.

Correspondingly, an embodiment of the present invention further provides an MS, including a monitor, a timer and a controller.

The monitor is adapted to monitor a radio channel of a target BSS and send the monitoring result to the controller, after a MS receives a PS handover command sent by an source BSS;

The timer is adapted to time the monitoring time of the monitor and send the timing result to the controller;

The controller is adapted to control the monitoring of the monitor and the timing of the timer, and according to the timing result, run the PS handover command and complete the PS handover if the monitoring result from the monitor is received in the timing range of the timer; and execute a handover failure flow if the timing result of the timer has not been received yet until the timer expires.

In the method for reducing service interruption of a mobile station during PS handover in mobile communication according to the embodiments of the present invention, after receiving a PS handover command sent from an source BSS, a mobile station monitors a radio channel of a target BSS, and a handover failure operation is added in the case that the MS does not receive the radio resource information allocated by the target BSS in a certain period of time, thereby avoiding the service interruption of the MS to the maximum extent.

### BRIEF DESCRIPTION OF THE DRAWINGS

Figure 1 is a flow chart of PS handover in the prior art;
Figure 2 is a flow chart of PS handover according a first embodiment of the present invention;
Figure 3 is a structural diagram of a MS according to an embodiment of the present invention; and
Figure 4 is a structural diagram of a system for reducing service interruption of a mobile station during PS handover in mobile communication according to an embodiment of the present invention.

### DETAILED DESCRIPTION OF THE EMBODIMENTS

An embodiment of the present invention provides a method for reducing service interruption of a mobile station during PS handover in a mobile communication system. According to the method, in a PS handover process, when receiving a handover command from the source BSS, the MS switches to the target BSS, monitors a radio channel of the target BSS and determines whether the radio resource information allocated by the target BSS is received in a certain period of time. If the radio resources allocated by the system are received in the certain period of time, the MS starts to run the handover command and completes the PS handover. If the radio resources allocated by the system is not received in the certain period of time, the MS returns to the cell of the source BSS, enters a handover failure flow and executes a handover failure operation.

In the above method, the certain period of time may be preset in the MS, or be obtained by the MS from a system message or a channel associated message carrying a timer sent from the system.

In a practical application, a timer or a counter may be initiated for timing, so as to determine whether a PS handover command has been received for more than a certain period of time.

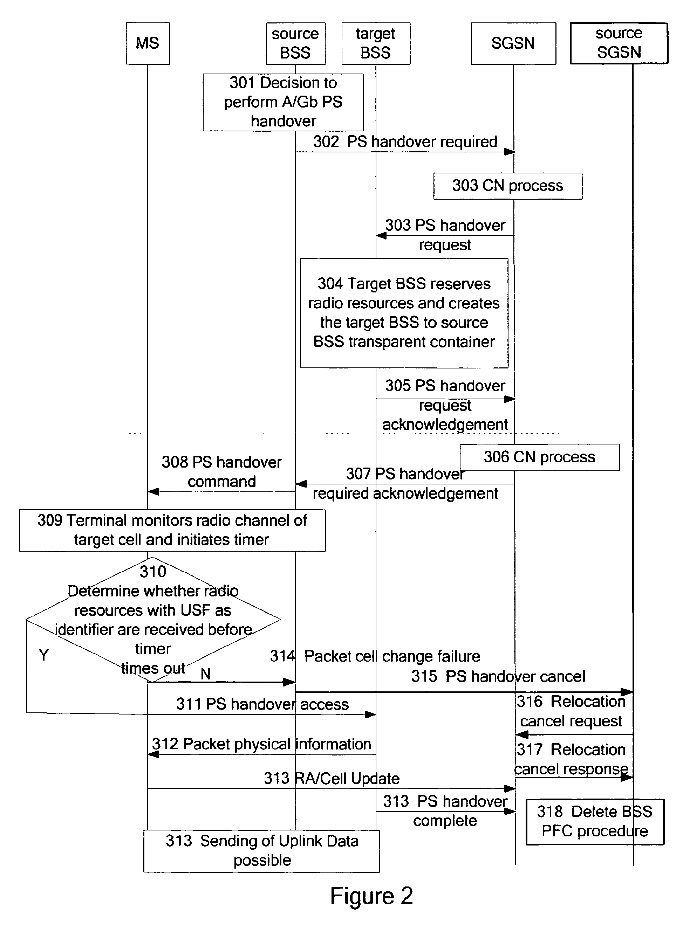

In a first embodiment of the present invention, the technical solution of the present invention is implemented with a timer for timing. In this embodiment, when receiving a PS handover command sent from the source BSS, the MS switches to the target BSS, and initiates a timer and monitors the radio channel of the target BSS. If the MS receives the radio resources, which are allocated by the target BSS and are using USF as the identifier, before the timer expires, the MS stops the timer and continues with the handover flow. If the MS does not receive the radio resources, which are allocated by the BSS and are using USF as the identifier" after the timer expires, the MS returns to the cell of the source BSS and enters a handover failure flow. As shown in Figure 2, the PS handover process implemented in this embodiment particularly includes the following steps.

Step 301 to Step 308 are the same as Step 101 to Step 108 in the prior art.

In Step 309, when receiving the PS handover command, the MS stops temporally the uplink subscriber data transmission, and buffers or discards the uplink subscriber data according to the QoS requirement of the current service, and then the MS switches to the time slot and radio channel of the target cell according to the target BSS identifier and starts a timer.

In Step 310, the MS determines whether radio resources with USF as the identifier are received in the radio channel of the target cell before the timer expires. If the radio resources are received, the MS stops the timer, and executes Step 311 to continue with a normal handover flow; otherwise, the timer expires, and the MS executes Step 314, thus entering a handover failure flow.

In Step 311, the MS sends a PS handover Access message to the target BSS according to the PS handover command.

Step 312 to Step 313 are the normal handover flow, which are the same as Step 110 to Step 111 in the prior art.

In Step 314, the MS returns to the source cell of the source BSS and sends a Packet Cell Change Failure message to the source BSS.

If the MS returns to the source cell and the resources of the source BSS are not released, the MS is in the packet transfer mode, and then the MS sends a Packet Cell Change Failure message in a Packet Access Control Channel (PACCH), to notify the system of the handover failure;

If the MS returns to the source cell and the resources of the source BSS are released, the MS is in the idle mode. At this point, if there is no data to be sent by the MS, the MS initiates a random access of the type 'single block without TBF establishment' in PCCCH or 'single block packet access' in CCCH, and then sends a Packet Cell Change Failure message in a single uplink channel to be allocated subsequently, notifying the system of the handover failure. If there is uplink data to be sent by the MS, the MS triggers to establish an uplink TBF, and then sends a Packet Cell Change Failure message over this TBF, to notify the system of the handover failure.

In Step 315, when receiving the Packet Cell Change Failure message, the source BSS sends a PS handover Cancel message to the source SGSN.

In Step 316, the source SGSN sends a Relocation Cancel Request to the target SGSN used for notifying the target SGSN to terminate the handover.

In Step 317, after receiving the Relocation Cancel Request, the target SGSN sends a Relocation Cancel Response to the source SGSN.

In Step 318, the target SGSN and the target BSS clear the resources allocated for the MS.

In a second embodiment of the present invention, if the source BSS and the target BSS are the same system, the radio resources allocated by the target BSS in the above method are the resources allocated by the BSS in the target cell, and the resources of the source BSS in the above method are the resources allocated by the BSS in the source cell. At this point, the handover failure flow in the above method is performed in the system, and the steps included may be simplified as follows.

A mobile station sends a Packet Cell Change Failure message in a radio channel allocated by the BSS in the source cell. When receiving the Packet Cell Change Failure message, the BSS releases the resources allocated in the target cell.

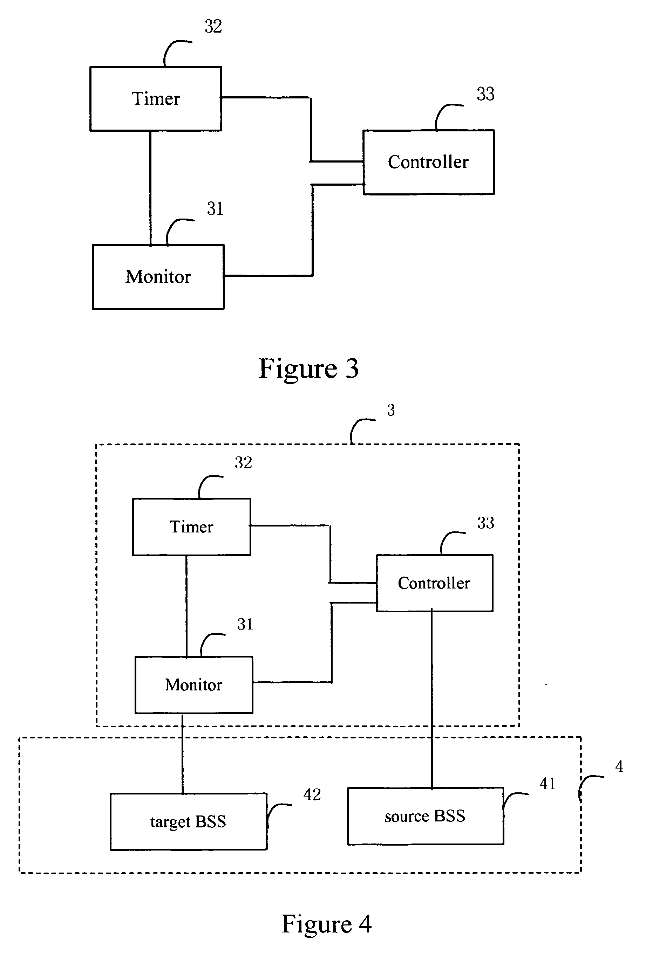

Correspondingly, as shown in Figure 3, an MS is provided, including a monitor 31, a timer 32 and a controller 33.

The monitor 31 is adapted to monitor a radio channel of a target BSS after the MS receives a PS handover command sent from a source BSS, and send the monitored result to the controller 33.

The timer 32 is adapted to count the monitoring time of the monitor 31 and send the timing result to the controller 33.

The controller 33 is adapted to control the monitor 31 to monitor and control the timer 32 to time. According to the timing result of the timer 32, the controller 33 is adapted to run the PS handover command and complete the PS handover, if the monitored result from the monitor 31 is received in the timing range of the timer 32; or if the monitored result from the monitor 31 has not been received before the timer 32 expires, the controller 33 is adapted to execute a handover failure flow.

The timer 32 may be a timer or a counter.

Furthermore, as shown in Figure 4, a system for reducing service interruption of a mobile station during PS handover in mobile communication is provided, which includes a MS 3 and a network-side device 4. The MS 3 includes a monitor 31, a timer 32 and a controller 33, and the network-side device 4 includes a source BSS 41 and a target BSS 42.

The source BSS 41 is adapted to send a PS handover command to the controller 33.

The target BSS 42 is adapted to send radio resources information to the monitor 31.

The monitor 31 is adapted to monitor whether the target BSS sends radio resources information, and send the monitored result to the controller 33.

The timer 32 is adapted to count the monitoring time of the monitor 31 and send the timing result to the controller 33.

The controller 33 is adapted to control the monitor 31 to monitor and control the timer 32 to time when receiving the PS handover command. According to the timing result of the timer 32, the controller 33 is adapted to run the PS handover command and complete the PS handover, if the monitored result from the monitor 31 is received in the timing range of the timer 32; or if the monitored result from the monitor 31 has not been received before the timer 32 expires, the controller 33 is adapted to executes a handover failure flow.

## Claims

1. A method for reducing service interruption of a mobile station, MS(3), during Packet Switched, PS, Domain handover in mobile communication, applied in a PS handover proceeding process, **characterized in that** the method comprises:
monitoring, by an MS(3), a radio channel of a target Base Station System, BSS(42), upon reception of a PS handover command sent from a source BSS(41);
running, by the MS(3), the PS handover command and completing the PS handover if the MS(3) receives the radio resources information from a target BSS in the radio channel within a certain period of time; and
performing, by the MS(3), a handover failure flow if the MS(3) fails to receive the radio resources information from the target BSS(42) in the radio channel within the certain period of time.

2. The method according to claim 1, wherein the certain period of time is obtained by the MS(3) from a system message or a channel associated message, or is preset in the MS(3).

3. The method according to claim 1, wherein the process of monitoring for the certain period of time comprises, the MS(3) starts to time when starting to monitor the radio channel of the target BSS(42).

4. The method according to claim 3, wherein the MS(3) times according to the following approach,
a timer(32) or a counter is provided in the MS(3);
when receiving the PS handover command from the source BSS(41), the MS(3) starts the timer(32) or the counter; and
when receiving radio resources information allocated by the target BSS(42), the MS(3) stops the timer or the counter.

5. The method according to claim 1, wherein the radio resources information comprises radio resources with Uplink State Failure, USF, as an identifier.

6. The method according to claim 1, wherein after the step in which the MS(3) receives a PS handover command sent from the source BSS(41) and before the step of monitoring the radio channel of the target BSS(42), the method further comprising:
pausing, by the MS(3), uplink subscriber data between the source BSS(41) and the MS(3), and buffering or discarding the uplink subscriber data according to the Quality of Service requirement of current service.

7. The method according to claim 1, wherein the handover failure flow comprises:
sending, by the MS(3), a Packet Cell Change Failure message to the source BSS(41);
sending, the source BSS(41), a PS handover Cancel message to a source Service GPRS Supporting Node, SGSN, upon reception of the Packet Cell Change Failure message;
sending, by the source SGSN, a Relocation Cancel Request to a target SGSN according to the PS handover Cancel message to notify the target SGSN to terminate the handover;
sending, by the target SGSN, a Relocation Cancel Response to the source SGSN upon reception of the Relocation Cancel Request; and
deleting, by the target SGSN and the target BSS(42), the resources allocated to the MS(3).

8. The method according to claim 7, wherein before the step of sending a Packet Cell Change Failure message to the source BSS(41), the method further comprising:
the MS(3) returns to the source BSS(41).

9. The method according to claim 8, wherein the step of sending a Packet Cell Change Failure message to the source BSS(41) comprises:
if the resources of the source BSS(41) are not released,
the MS(3) is in packet transfer mode, and the MS(3) sends the Packet Cell Change Failure message to the source BSS(41) in a packet associated control channel; and
if the resources of the source BSS(41) are released,
the MS(3) enters an idle state and sends the Packet Cell Change Failure message to the source BSS(41).

10. The method according to claim 9, wherein the step in which the MS(3) enters an idle state and sends the Packet Cell Change Failure message to the source BSS(41) comprises:
if there is no data to be sent by the MS(3), initiates a random access, and then sends the Packet Cell Change Failure message to the source BSS(41) in a single uplink channel to be allocated subsequently;
if there is uplink data to be sent by the MS(3), triggers to establish an uplink Temporary Block Flow, TBF, and then sends the Packet Cell Change Failure message to the source BSS(41) over the TBF.

11. The method according to any one of claims 1 to 10, wherein if the source BSS(41) and the target BSS(42) are the same system, the radio resources from the target BSS(42) are the resources allocated by the target BSS(42) in a target cell.

12. The method according to claim 9 or 10, wherein if the source BSS(41) and the target BSS(42) are the same system, the resources of the source BSS(41) are the resources allocated by the source BSS(41) in a source cell.

13. The method according to claim 1, wherein if the source BSS(41) and the target BSS(42) are the same system, the handover failure flow comprises:
sending, by the MS(3), a Packet Cell Change Failure message to the source BSS(41); and
releasing, by the source BSS(41), the resources allocated for the MS(3) in a target cell upon reception of the Packet Cell Change Failure message.

14. A Mobile Station (MS(3)), comprising a monitor (31), a timer (32) and a controller (33), **characterized in that**:
the monitor (31) is adapted to monitor a radio channel of a target Base Station System, BSS, after the MS(3) receives a Packet Switched , PS, Domain handover command sent from a source BSS, and send the monitored result to the controller (33),;
the timer (32) is adapted to time the monitoring time of the monitor (31) and send the timing result to the controller (33); and
the controller (33) is adapted to control the monitor (31) to monitor and control the timer (32) to time, and according to the timing result of the timer (32), run the PS handover command and complete the PS handover if the monitored result from the monitor (31) is received in the timing range of the timer (32), or execute a handover failure flow if the monitored result from the monitor (31) has not been received before the timer (32) expires.

## Patentansprüche

1. Verfahren zum Verringern von Dienstunterbrechung einer Mobilstation MS (3) während einer paketvermittelten, PS, Domain-Verbindungsübergabe bei der Mobilkommunikation, die in einem weitergehenden PS-Verbindungsübergabeprozess angewendet wird, **dadurch gekennzeichnet, dass** das Verfahren Folgendes umfasst:
Überwachen eines Funkkanals eines Zielbasisstationssystems BSS (42) durch eine MS (3) beim Empfang eines von einer Quell-BSS (41) empfangenen PS-Verbindungsübergabebefehls;
Ausführen des PS-Verbindungsübergabebefehls und Abschließen der PS-Verbindungsübergabe durch die MS (3), falls die MS (3) die Funkressourceninformationen innerhalb einer bestimmten Zeitdauer in dem Funkkanal von einer Ziel-BSS empfängt; und
Ausführen eines Verbindungsübergabe-Störungsablaufs durch die MS (3), falls die MS (3) die Funkressourceninformationen innerhalb der bestimmten Zeitdauer in dem Funkkanal von der Ziel-BSS (42) nicht empfängt.

2. Verfahren nach Anspruch 1, wobei die bestimmte Zeitdauer durch die MS (3) aus einer Systemnachricht oder einer dem Kanal zugeordneten Nachricht erhalten wird oder in der MS (3) vorgegeben ist.

3. Verfahren nach Anspruch 1, wobei der Prozess des Überwachens während der bestimmten Zeitdauer umfasst, dass die MS (3) beginnt, die Zeit zu messen, wenn sie beginnt, den Funkkanal der Ziel-BSS (42) zu überwachen.

4. Verfahren nach Anspruch 3, wobei die MS (3) in Übereinstimmung mit der folgenden Methode die Zeit misst:
ein Zeitgeber (32) oder ein Zähler ist in der MS (3) vorgesehen;
wenn die MS (3) den PS-Verbindungsübergabebefehl von der Quell-BSS (41) empfängt, startet sie den Zeitgeber (32) oder den Zähler; und
wenn die MS (3) durch die Ziel-BSS (42) zugeteilte Funkressourceninformationen empfängt, stoppt sie den Zeitgeber oder den Zähler.

5. Verfahren nach Anspruch 1, wobei die Funkressourceninformationen Funkressourcen mit Aufwärtsstreckenzustandsstörung, USF, als einen Identifizierer umfassen.

6. Verfahren nach Anspruch 1, wobei nach dem Schritt, in dem die MS (3) einen von der Quell-BSS (41) gesendeten PS-Verbindungsübergabebefehl empfängt, und vor dem Schritt des Überwachens des Funkkanals der Ziel-BSS (42) das Verfahren ferner Folgendes umfasst:
Anhalten von Aufwärtsstrecken-Teilnehmerdaten zwischen der Quell-BSS (41) und der MS (3) und Puffern oder Verwerfen der Aufwärtsstrecken-Teilnehmerdaten in Übereinstimmung mit der Dienstqualitätsanforderung des momentanen Dienstes durch die MS (3).

7. Verfahren nach Anspruch 1, wobei der Verbindungsübergabe-Störungsablauf Folgendes umfasst:
Senden einer Paketzellenänderungs-Störungsnachricht durch die MS (3) an die Quell-BSS (41);
Senden einer PS-Verbindungsübergabe-Abbruchnachricht durch die Quell-BSS (41) an einen Quell-GPRS-Dienstunterstützungsknoten SGSN beim Empfang der Paketzellenänderungs-Störungsnachricht;
Senden einer Verlagerungsabbruchanforderung durch den Quell-SGSN an einen Ziel-SGSN in Übereinstimmung mit der PS-Verbindungsübergabe-Abbruchnachricht, um den Ziel-SGSN zu benachrichtigen, die Verbindungsübergabe zu beenden;
Senden einer Verlagerungsabbruchantwort durch den Ziel-SGSN an den Quell-SGSN beim Empfang der Verlagerungsabbruchanforderung; und
Löschen der der MS (3) zugeteilten Ressourcen durch den Ziel-SGSN und die Ziel-BSS (42).

8. Verfahren nach Anspruch 7, wobei vor dem Schritt des Sendens einer Paketzellenänderungs-Störungsnachricht an die Quell-BSS (41) das Verfahren ferner Folgendes umfasst:
die MS (3) kehrt zur Quell-BSS (41) zurück.

9. Verfahren nach Anspruch 8, wobei der Schritt des Sendens einer Paketzellenänderungs-Störungsnachricht an die Quell-BSS (41) Folgendes umfasst:
falls die Ressourcen der Quell-BSS (41) nicht freigegeben sind,
befindet sich die MS (3) in der Paketübertragungsbetriebsart und sendet die MS (3) die Paketzellenänderungs-Störungsnachricht in einem dem Paket zugeordneten Steuerkanal an die Quell-BSS (41); und
falls die Ressourcen der Quell-BSS (41) freigegeben sind,
tritt die MS (3) in einen Ruhezustand ein und sendet die Paketzellenänderungs-Störungsnachricht an die Quell-BSS (41).

10. Verfahren nach Anspruch 9, wobei der Schritt, in dem die MS (3) in einen Ruhezustand eintritt und die Paketzellenänderungs-Störungsnachricht an die Quell-BSS (41) sendet, Folgendes umfasst:
falls es keine durch die MS (3) zu sendenden Daten gibt, Einleiten eines Direktzugriffs und dann Senden der Paketzellenänderungs-Störungsnachricht an die Quell-BSS (41) in einem einzelnen Aufwärtsstreckenkanal, der anschließend zuzuteilen ist;
falls es durch die MS (3) zu sendende Aufwärtsstreckendaten gibt, Auslösen des Herstellens eines vorübergehenden Aufwärtsstrecken-Blockflusses, Aufwärtsstrecken-TBF, und dann Senden der Paketzellenänderungs-Störungsnachricht über den TBF an die Quell-BSS (41).

11. Verfahren nach einem der Ansprüche 1 bis 10, wobei, falls die Quell-BSS (41) und die Ziel-BSS (42) dasselbe System sind, die Funkressourcen von der Ziel-BSS (42) die Ressourcen sind, die durch die Ziel-BSS (42) in einer Zielzelle zugeteilt werden.

12. Verfahren nach Anspruch 9 oder 10, wobei, falls die Quell-BSS (41) und die Ziel-BSS (42) dasselbe System sind, die Ressourcen der Quell-BSS (41) die Ressourcen sind, die durch die Quell-BSS (41) in einer Quellzelle zugeteilt werden.

13. Verfahren nach Anspruch 1, wobei, falls die Quell-BSS (41) und die Ziel-BSS (42) dasselbe System sind, der Verbindungsübergabe-Störungsablauf Folgendes umfasst:
Senden einer Paketzellenänderungs-Störungsnachricht durch die MS (3) an die Quell-BSS (41); und
Freigeben der für die MS (3) in einer Zielzelle zugeteilten Ressourcen durch die Quell-BSS (41) beim Empfang der Paketzellenänderungs-Störungsnachricht.

14. Mobilstation (MS (3)), die eine Überwachungseinrichtung (31), einen Zeitgeber (32) und eine Steuereinrichtung (33) umfasst, **dadurch gekennzeichnet, dass**:
die Überwachungseinrichtung (31) beschaffen ist, einen Funkkanal eines ZielBasisstationssystems BSS zu überwachen, nachdem die MS (3) einen von einer Quell-BSS gesendeten Befehl für die paketvermittelte, PS, Domain-Verbindungsübergabe empfangen hat, und das Überwachungsergebnis an die Steuereinrichtung (33) zu senden;
der Zeitgeber (32) beschaffen ist, die Überwachungszeit der Überwachungseinrichtung (31) zu messen und das Zeitmessungsergebnis an die Steuereinrichtung (33) zu senden; und
die Steuereinrichtung (33) beschaffen ist, die Überwachungseinrichtung (31) zu überwachen und den Zeitgeber (32) zu steuern, die Zeit zu messen, und in Übereinstimmung mit dem Zeitmessungsergebnis des Zeitgebers (32) den PS-Verbindungsübergabebefehl auszuführen und die PS-Verbindungsübergabe abzuschließen, falls das Überwachungsergebnis von der Überwachungseinrichtung (31) in dem Zeitmessbereich des Zeitgebers (32) empfangen wird, oder einen Verbindungsübergabe-Störungsablauf auszuführen, falls das Überwachungsergebnis von der Überwachungseinrichtung (31) nicht empfangen worden ist, bevor der Zeitgeber (32) abläuft.

## Revendications

1. Procédé de réduction d'une interruption de service d'une station mobile, MS (3), durant un transfert de Domaine à commutation par paquets, PS, dans une communication mobile, appliqué à un processus de transfert PS, **caractérisé en ce qu'**il comprend :
le contrôle, par une MS (3), d'un canal radio d'un Système de Station de Base, BSS (42), cible, à la réception d'une commande de transfert PS envoyée par un BSS source (41) ;
l'exécution, par la MS (3), de la commande de transfert PS et l'achèvement du transfert PS si la MS (3) reçoit les informations de ressources radio depuis un BSS cible dans le canal radio dans une certaine période de temps ; et
l'exécution, par la MS (3), d'un flux d'échec de transfert si la MS (3) ne reçoit pas les informations de ressources radio depuis le BSS cible (42) dans le canal radio dans la certaine période de temps.

2. Procédé selon la revendication 1, dans lequel la certaine période de temps est obtenue par la MS (3) à partir d'un message de système ou d'un message associé au canal, ou est préétablie dans la MS (3).

3. Procédé selon la revendication 1, dans lequel le processus de contrôle de la certaine période de temps comprend le lancement par la MS (3) d'une temporisation lorsqu'elle commence à contrôler le canal radio du BSS cible (42).

4. Procédé selon la revendication 3, dans lequel la MS (3) temporise de la façon suivante :
un temporisateur (32) ou un compteur est fourni dans la MS (3) ;
à la réception de la commande de transfert PS depuis le BSS source (41), la MS (3) lance le temporisateur (32) ou le compteur ; et
à la réception des informations de ressources radio attribuées par le BSS cible (42), la MS (3) arrête le temporisateur ou le compteur.

5. Procédé selon la revendication 1, dans lequel les informations de ressources radio comprennent des ressources radio ayant un Echec d'état de Liaison Montante, USF, comme identifiant.

6. Procédé selon la revendication 1, dans lequel après l'étape durant laquelle la MS (3) reçoit une commande de transfert PS envoyée par le BSS source (41) et avant l'étape de contrôle du canal radio du BSS cible (42), le procédé comprend en outre :
la mise en pause, par la MS (3), de données d'abonné de liaison montante entre le BSS source (41) et la MS (3), et la mise en mémoire tampon ou le rejet des données d'abonné de liaison montante en fonction de l'exigence de Qualité de Service du service courant.

7. Procédé selon la revendication 1, dans lequel le flux d'échec de transfert comprend :
l'envoi, par la MS (3), d'un message d'Echec de Changement de Cellule de Paquet au BSS source (41) ;
l'envoi, par le BSS source (41), d'un message de Suppression de transfert PS à un Noeud de Support de GPRS de Service, SGSN, source, à la réception du message d'Echec de Changement de Cellule de Paquet ;
l'envoi, par le SGSN source, d'une Requête de Suppression de Repositionnement à un SGSN cible en fonction du message de Suppression de transfert PS afin de notifier au SGSN cible de mettre fin au transfert ;
l'envoi, par le SGSN cible, d'une Réponse à la Suppression de Repositionnement au SGSN source à la réception de la Requête de Suppression de Repositionnement ; et
la suppression, par le SGSN cible et le BSS cible (42), des ressources attribuées à la MS (3).

8. Procédé selon la revendication 7, comprenant en outre, avant l'étape d'envoi d'un message d'Echec de Changement de Cellule de Paquet au BSS source (41) :
le retour de la MS (3) au BSS source (41).

9. Procédé selon la revendication 8, dans lequel l'étape d'envoi d'un message d'Echec de Changement de Cellule de Paquet au BSS source (41) comprend :
si les ressources du BSS source (41) ne sont pas libérées,
la MS (3) est en mode de transfert de paquet, et la MS (3) envoie le message d'Echec de Changement de Cellule de Paquet au BSS source (41) dans un canal de contrôle associé au paquet ; et
si les ressources du BSS source (41) sont libérées,
la MS (3) prend un état inactif et envoie le message d'Echec de Changement de Cellule de Paquet au BSS source (41).

10. Procédé selon la revendication 9, dans lequel l'étape dans laquelle la MS (3) prend un état inactif et envoie le message d'Echec de Changement de Cellule de Paquet au BSS source (41) comprend :
si la MS (3) n'a aucune donnée à envoyer, l'initialisation d'un accès aléatoire, puis l'envoi du message d'Echec de Changement de Cellule de Paquet au BSS source (41) dans un canal de liaison montante unique à attribuer ultérieurement ;
si la MS (3) a des données de liaison montante à envoyer, le déclenchement de l'établissement d'un Flux de Blocs Temporaires, TBF, de liaison montante, puis l'envoi du message d'Echec de Changement de Cellule de Paquet au BSS source (41) sur le TBF.

11. Procédé selon l'une quelconque des revendications 1 à 10, dans lequel si le BSS source (41) et le BSS cible (42) sont le même système, les ressources radio du BSS cible (42) sont les ressources attribuées par le BSS cible (42) dans une cellule cible.

12. Procédé selon la revendication 9 ou 10, dans lequel si le BSS source (41) et le BSS cible (42) sont le même système, les ressources du BSS source (41) sont les ressources attribuées par le BSS source (41) dans une cellule source.

13. Procédé selon la revendication 1, dans lequel si le BSS source (41) et le BSS cible (42) sont le même système, le flux d'échec de transfert comprend :
l'envoi, par la MS (3), d'un message d'Echec de Changement de Cellule de Paquet au BSS source (41) ; et
la libération, par le BSS source (41), des ressources attribuées pour la MS (3) dans une cellule cible à la réception du message d'Echec de Changement de Cellule de Paquet.

14. Station mobile, (MS (3)), comprenant un contrôleur (31), un temporisateur (32) et une unité de commande (33), **caractérisée en ce que** :
le contrôleur (31) est adapté pour contrôler un canal radio d'un Système de Station de Base, BSS, cible, après que la MS (3) a reçu une commande de transfert de Domaine à Commutation par paquets, PS, envoyée par un BSS source, et envoyer le résultat contrôlé à l'unité de commande (33) ;
le temporisateur (32) est adapté pour compter le temps de contrôle du contrôleur (31) et envoyer le résultat de la temporisation à l'unité de commande (33) ; et
l'unité de commande (33) est adaptée pour commander au contrôleur (31) de contrôler et au temporisateur (32) de compter le temps, et en fonction du résultat du temporisateur (32), exécuter la commande de transfert PS et achever le transfert PS si le résultat contrôlé provenant du contrôleur (31) est reçu dans la plage de temporisation du temporisateur (32), ou exécuter un flux d'échec de transfert si le
résultat contrôlé provenant du contrôleur (31) n'a pas été reçu avant l'expiration du temporisateur (32).
